# EUROPÄISCHE PATENTSCHRIFT

(11) **EP 2 640 983 B1**
(45) Veröffentlichungstag und Bekanntmachung des Hinweises auf die Patenterteilung: **17.05.2017**
(21) Anmeldenummer: 11757637.1
(22) Anmeldetag: 19.09.2011
(51) Int. Cl.: F16B 5/01, F16B 12/24, F16B 12/48

(54) **VERBINDUNGSVORRICHTUNG**
CONNECTING DEVICE
DISPOSITIF DE LIAISON

(30) Priorität: 16.11.2010 DE 102010051388
(43) Veröffentlichungstag der Anmeldung: 25.09.2013
(73) Patentinhaber: Fritz Egger GmbH & Co. OG, 6380 St. Johann in Tirol (AT)
(72) Erfinder: REITER, Bruno, A-6480 St. Johann in Tirol (AT); OBRIST, Mario, A-5730 Mittersill (AT)
(74) Vertreter: Cohausz & Florack
(86) Internationale Anmeldenummer: PCT/EP2011/066168
(87) Internationale Veröffentlichungsnummer: WO 2012/065771

(56) Entgegenhaltungen:
- EP-A1- 2 428 137
- DE-A1- 10 250 118
- DE-A1-102007 020 619
- DE-U1- 29 804 267
- DE-U1-202006 002 649
- US-A- 3 039 572

## Beschreibung

Die Erfindung betrifft eine Verbindungsanordnung mit einer Leichtbauplatte, die zwei Deckplatten und eine Mittellage dazwischen aufweist, mit einem weiteren Bauteil und mit einer Verbindungsvorrichtung zum Verbinden der Leichtbauplatte mit dem weiteren Bauteil, enthaltend ein erstes Verbindungsmittel mit einem ersten Abschnitt, der zum Einsetzen in eine Vertiefung in der Leichtbauplatte konfiguriert ist, und mit einem zweiten Abschnitt, der zum Einsetzen in eine Vertiefung in dem weiteren Bauteil konfiguriert ist, wobei die Verbindungsvorrichtung die Leichtbauplatte mit dem weiteren Bauteil verbindet und wobei der erste Abschnitt einen größeren Außenquerschnitt als der zweite Abschnitt hat. Eine entsprechende Verbindungsanordnung ist beispielsweise aus der DE 20 2006 002649 U1 bekannt.

Ähnliche Verbindungsanordnungen sind der DE 10 2007 020619 A1 und der US 3,039,572 A zu entnehmen.
Aus dem Stand der Technik ist es beispielsweise bei der Möbelherstellung bekannt, Seitenteile eines Möbels mit einem orthogonal dazu verlaufenden Haupt oder Boden mittels stiftförmigen Holzdübeln zu verbinden.

DE 20 2006 002 649 U1 offenbart eine weitere gattungsgemäße Verbindungsanordnung.

Üblicherweise werden dazu in die Verbindungsfläche der miteinander zu verbindenden Bauteile Bohrungen als Aufnahme für die Holzdübel eingebracht. Beispielsweise werden in die Böden jeweils zwei parallele Bohrungen und in das Seitenteil an den im montierten Zustand gegenüberliegenden Stellen entsprechende Bohrungen in das Material eingebracht. Bei dem Material handelt es sich in der Regel um einen plattenförmigen Holzwerkstoff, beispielsweise um eine Span-, Faser- oder OSB-Platte.

Die Holzdübel werden unter Kraftschluss in die Bohrungen eingesetzt und verbinden auf diese Weise die einzelnen Bauteile miteinander.

In zunehmendem Maße werden aber bei der Möbelproduktion auch so genannte Leichtbauplatten eingesetzt. Damit sind aus zwei Deckplatten und einer dazwischen angeordneten leichten Mittellage bestehende plattenförmige Bauteile gemeint, die als Deckplatten Holzwerkstoffplatten, wie zum Beispiel Span-, Faser- oder OSB-Platten, aufweisen. Leichte Mittellage bedeutet, dass das Gewicht und/oder die Dichte der Mittellage deutlich geringer als bei den Deckplatten ist. Beispielsweise wird als leichte Mittellage eine Wabenstruktur, insbesondere Kartonwabenstruktur, verwendet.

Problematisch bei Leichtbauplatten ist allerdings, dass das Material der Mittellage, gerade dann, wenn es sich um eine Wabenstruktur handelt, keinen ausreichenden Halt für einen herkömmlichen stiftförmigen Dübel bietet und erst recht keinen Kraftschluss zwischen solch einem Dübel und dem Material der Mittellage gewährleistet. Bei der Möbelherstellung können daher Leichtbauplatten nur bedingt und nur unter erhöhtem Aufwand verwendet werden. Insbesondere können Leichtbauplatten nicht als diejenigen Bauteile eingesetzt werden, welche zur stirnseitigen Aufnahme von Holzdübeln vorgesehen sind, beispielsweise das Haupt oder die Böden des Möbels.

Es ist auch bekannt, Leichtbauplatten im Bereich ihrer Stirnkante mit einem Querriegel zu versehen, der zwischen den beiden Deckplatten im Bereich der Mittellage angeordnet ist und aus Vollmaterial besteht. Solche Leichtbauplatten sind aber einerseits aufwendig in ihrer Herstellung und andererseits auch schwerer als riegellose Leichtbauplatten.

Die eingangs genannte Verbindungsanordnung besteht aus einer Vielzahl von Bauteilen, nämlich zumindest einem Anzugsbolzen, einem drehbar gelagerten Spannteil, einem Gehäuse und einem Dübel. Darüber hinaus sind mehrere Bohrungen und Aussparungen in der Leichtbauplatte und damit zu verbindenden weiteren Bauteil vorzusehen, nämlich eine stirnseitige Aussparung sowie zwei deckplattenseitige Aussparungen in der Leichtbauplatte sowie eine deckplattenseitige Bohrung in dem weiteren Bauteil. Die Herstellung einer Verbindungsanordnung ist entsprechend aufwendig.

Es ist daher die Aufgabe der vorliegenden Erfindung, eine Verbindungsvorrichtung zu schaffen, mit der eine Leichtbauplatte auf besonders einfache Weise mit einem weiteren Bauteil verbunden werden kann.

Die zuvor hergeleitete und aufgezeigte Aufgabe wird erfindungsgemäß bei einer Verbindungsanordnung mit einer Leichtbauplatte, die zwei Deckplatten und eine Mittellage dazwischen aufweist, mit einem weiteren Bauteil und mit einer Verbindungsvorrichtung zum Verbinden der Leichtbauplatte mit dem weiteren Bauteil, enthaltend ein erstes Verbindungsmittel mit einem ersten Abschnitt, der zum Einsetzen in eine Vertiefung in der Leichtbauplatte konfiguriert ist, und mit einem zweiten Abschnitt, der zum Einsetzen in eine Vertiefung in dem weiteren Bauteil konfiguriert ist, wobei die Verbindungsvorrichtung die Leichtbauplatte mit dem weiteren Bauteil verbindet und wobei der erste Abschnitt einen größeren Außenquerschnitt als der zweite Abschnitt hat, dadurch gelöst, dass sich die Vertiefung der Leichtbauplatte von einer Stirnkante der Leichtbauplatte parallel zu den beiden Deckplatten ins Innere der Leichtbauplatte erstreckt, dass der erste Abschnitt und der zweite Abschnitt des ersten Verbindungsmittels zumindest abschnittsweise aus demselben Material bestehen und einstückig sind, dass der erste Abschnitt des ersten Verbindungsmittels zumindest teilweise, vorzugsweise vollständig, in der Vertiefung angeordnet ist und dass der erste Abschnitt des ersten Verbindungsmittels beide Deckplatten der Leichtbauplatte berührt und dadurch eine kraftschlüssige Verbindung zwischen Leichtbauplatte und Verbindungsvorrichtung bildet. Eine der oder beide Leichtbauplatten kann bzw. können dabei wie zuvor als Stand der Technik beschrieben ausgebildet sein und als Mittellage insbesondere eine Kartonwabenstruktur aufweisen.

Indem der erste Abschnitt einen größeren Außenquerschnitt, gemeint ist der Querschnitt zwischen den Außenflächen, als der zweite Abschnitt hat, wird erreicht, dass die Verbindungsvorrichtung mit dem ersten (größeren) Abschnitt auch bei einem stirnseitigen Einsetzen in eine Leichtbauplatte einen ausreichenden Halt findet und auch einen Kraftschluss bildet, da die Außenfläche des ersten Abschnitts unmittelbar mit den Innenseiten der beiden Decklagen der Leichtbauplatte in Kontakt bringbar ist. Dem gegenüber entspricht der zweite (kleinere) Abschnitt in seinen Abmessungen vorzugsweise einem herkömmlichen Holzdübel (Standarddübel) und kann auf diese Weise in die Bohrungen für Standarddübel eingesetzt werden. Es muss bei der Möbelherstellung oder ähnlichen Herstellungsverfahren, bei dem Bauteile mittels Dübeln miteinander zu verbinden sind, also nicht, nur weil zumindest einige der Bauteile Leichtbauplatten sind, vollständig auf die herkömmlichen automatisierten Prozesse zur Herstellung von Standarddübelbohrungen und zum Einsetzen von Standarddübeln verzichtet werden. Im Gegenteil, Bauteile, die entweder keine Leichtbauplatten sind, sondern beispielsweise Holzwerkstoffplatten oder andere Platten aus Vollmaterial, oder Bauteile, die nicht stirnseitig mit Dübelbohrungen versehen werden müssen, können weiterhin unter Beibehaltung der herkömmlichen Fertigungsprozesse mit den Standarddübelbohrungen versehen werden. Insbesondere sind dafür auch keine anderen Werkzeuge als die standardmäßig verwendeten Werkzeuge notwendig. Auch das Einsetzen der erfindungsgemäßen ersten Verbindungsmittel mit dem zweiten Abschnitt in die Standarddübelbohrungen kann auf herkömmliche Weise, insbesondere automatisiert, erfolgen.

Leichtbauplatten, die dagegen stirnseitige Verbindungsbohrungen erhalten sollen, können nunmehr erstmalig auf besonders einfache Weise und ohne einen mittels Querringeln verstärkten Stirnkantenbereich aufweisen zu müssen mit anderen Bauteilen verbunden werden, da der Abschnitt mit dem größeren Außenquerschnitt auch eine kraftschlüssige Verbindung zwischen dem Verbindungsmittel und den Deckplatten der Leichtbauplatte erlaubt. Wie im Weiteren noch näher beschrieben wird, können dabei die Außenabmessungen des ersten Abschnitts des ersten Verbindungsmittels der Verbindungsvorrichtung und die Dicke der Mittellage der Leichtbauplatte einander entsprechen, so dass der erste Abschnitt nach dem Einsetzen an der Stirnkante der Leichtbauplatte kraftschlüssig an den Innenseiten der Deckplatte anliegt. Bei Leichtbauplatten, bei denen die Mittellage eine Dicke hat, die kleiner als die Außenabmessungen des ersten Abschnitts ist, kann auch eine stirnseitig eingebrachte Ausfräsung in der Leichtbauplatte vorgesehen sein, die vom Innern der Leichtbauplatte bis zu den Deckplatten reicht, so dass auch in diesem Fall der Abschnitt mit dem größeren Außenquerschnitt kraftschlüssig in die Leichtbauplatte eingesetzt werden kann.

Gemäß einer Ausgestaltung der erfindungsgemäßen Verbindungsanordnung haben der erste Abschnitt und der zweite Abschnitt einen kreisförmigen Außenquerschnitt, wobei der Durchmesser des ersten Abschnitts größer als der Durchmesser des zweiten Abschnitts ist. Ein kreisförmiger Außenquerschnitt hat den Vorteil, dass der jeweilige Abschnitt optimal mit einer korrespondierenden Bohrung, insbesondere kraftschlüssig, zusammenwirkt. Insbesondere können die Standardbohrungen für die herkömmlichen Standarddübel weiterhin in einigen Bauteilen, die mit der Leichtbauplatte verbunden werden sollen, verwendet werden. Der zweite (kleinere) Abschnitt ersetzt damit den herkömmlichen stiftförmigen Dübel.

Gemäß einer weiteren Ausgestaltung ist der erste Abschnitt und/oder der zweite Abschnitt zumindest über einen Teil seiner Länge, insbesondere über den größten Teil seiner Länge, hohl. Auf diese Weise kann, da üblicherweise eine Vielzahl von Dübeln eingesetzt wird, um ein Möbel herzustellen, Gewicht eingespart werden. So ist es bei Möbeln, die unter Verwendung von Leichtbauplatten hergestellt werden, ohnehin ein wesentliches Anliegen, das Gesamtgewicht eines Möbels möglichst zu reduzieren. Auch hat ein zumindest teilweise hohles Verbindungsmittel gegenüber einem solchen aus Vollmaterial einen deutlichen Kostenvorteil.

Gemäß noch einer weiteren Ausgestaltung der erfindungsgemäßen Verbindungsanordnung ist zwischen dem ersten Abschnitt und dem zweiten Abschnitt ein umlaufender Kragen vorgesehen. Der umlaufende Kragen dient dabei als Anschlag in dem Fall, dass aus konstruktionstechnischen Gründen zuerst der Abschnitt mit dem größeren Außenquerschnitt in eine Leichtbauplatte eingesetzt werden soll und erst danach das weitere Bauteil auf den zweiten Abschnitt des Verbindungsmittels aufgesetzt werden soll. Ohne einen solchen Kragen würde in diesem Fall das Risiko bestehen, dass das erste Verbindungsmittel beim Aufsetzen des weiteren Bauteils auf den zweiten Abschnitt unbeabsichtigt in die Leichtbauplatte hineingeschoben wird, insbesondere in dem Fall, dass der erste Abschnitt des ersten Verbindungsmittels in seinen Außenabmessungen der Dicke der Mittellage entspricht.

Wie zuvor beschrieben wurde, erlaubt die erfindungsgemäße Verbindungsanordnung unter Verwendung ausschließlich des ersten Verbindungsmittels die teilweise Beibehaltung der herkömmlichen Herstellungsprozesse, das heißt insbesondere der Einbringung von Standarddübelbohrungen, da der zweite (kleinere) Abschnitt des ersten Verbindungsmittels in seinen Abmessungen bevorzugt einem Standarddübel entspricht. Insbesondere hat der zweite Abschnitt dabei einen Außendurchmesser von 4 bis 8 mm, bevorzugt von 5 bis 7 mm und besonders bevorzugt von 6 mm. Ein solcher Abschnitt kann wie gesagt ohne weiteres in korrespondierende Bohrungen in herkömmlichen Holzwerkstoffplatten, auch stirnseitig, oder in korrespondierende Bohrungen in Leichtbauplatten, die senkrecht zur Plattenebene und damit durch zumindest eine Deckplatte verlaufen, eingesetzt werden.

Sollen dagegen zwei Leichtbauplatten stirnseitig, das heißt Stoß an Stoß miteinander verbunden werden, was beispielsweise bei der Herstellung von Arbeitsplatten, insbesondere Küchenarbeitsplatten, gewünscht sein kann, kann neben dem ersten Verbindungsmittel noch ein damit zusammenwirkendes zweites Verbindungsmittel vorgesehen sein, durch das der relativ kleine Querschnitt des zweiten Abschnitts des ersten Verbindungsmittels ausgeglichen werden kann. Das zweite Verbindungsmittel stellt somit einen Adapter dar. Zu diesem Zweck enthält die Verbindungsvorrichtung somit gemäß einer weiteren Ausgestaltung der erfindungsgemäßen Verbindungsanordnung ein zweites Verbindungsmittel, das zum Einsetzen in eine Vertiefung in dem weiteren Bauteil, beispielsweise der weiteren Leichtbauplatte, konfiguriert ist und eine Aufnahme aufweist, die zum zumindest teilweisen, vorzugsweise vollständigen, Einsetzen des zweiten Abschnitts des ersten Verbindungsmittels konfiguriert ist, insbesondere derart, dass der zweite Abschnitt des ersten Verbindungsmittels kraftschlüssig mit dem zweiten Verbindungsmittel verbindbar ist. Mit anderen Worten ist das zweite Verbindungsmittel so ausgebildet, dass es auf den zweiten (kleineren) Abschnitt des ersten Verbindungsmittels aufgesteckt werden kann, um dadurch in diesem Bereich der Verbindungsvorrichtung den Außenquerschnitt zu vergrößern. Insbesondere entspricht dabei der Außendurchmesser bzw. entsprechen die äußeren Abmessungen des zweiten Verbindungsmittels dem Außendurchmesser bzw. den äußeren Abmessungen des ersten Abschnitts des ersten Verbindungsmittels. Dadurch ist die Verbindungsvorrichtung der erfindungsgemäßen Verbindungsanordnung auch zur Verbindung der Leichtbauplatte mit einer weiteren Leichtbauplatte geeignet, wenn die weitere Leichtbauplatte ebenfalls eine stirnseitige Aufnahme für die Verbindungsvorrichtung hat. Dabei ist bevorzugt zwischen allen Paarungen ein Kraftschluss (Presssitz) vorgesehen, das heißt zwischen erstem Abschnitt des ersten Verbindungsmittels und erster Leichtbauplatte, zwischen zweitem Abschnitt des ersten Verbindungsmittels und zweitem Verbindungsmittel sowie zwischen zweitem Verbindungsmittel und zweiter Leichtbauplatte.

Gemäß einer weiteren Ausgestaltung der erfindungsgemäßen Verbindungsanordnung bestehen der erste Abschnitt und der zweite Abschnitt des ersten Verbindungsmittels und das zweite Verbindungsmittel zumindest abschnittsweise, vorzugsweise vollständig, aus demselben Material, insbesondere einem Kunststoff. Erfindungsgemäß sind, wie zuvor definiert, der erste und der zweite Abschnitt des ersten Verbindungsmittels einstückig, das heißt aus einem einzigen Stück gefertigt. Dabei hat sich Kunststoff als besonders geeignet erwiesen, da er nicht wie die herkömmlichen Holzdübel feuchtigkeitsanfällig ist, das heißt durch Feuchtigkeitsaufnahme quellen oder durch Feuchtigkeitsabgabe schrumpfen kann. Durch Feuchtigkeitseinflüsse können sich herkömmliche Holzdübel im Laufe der Zeit verformen, was gerade bei automatisierten Herstellungsprozessen nachteilig ist und zu nicht ausreichend festen Verbindungen führt. Eine Verbindungsvorrichtung aus Kunststoff ist dagegen wesentlich formbeständiger.

Gemäß noch einer weiteren Ausgestaltung der erfindungsgemäßen Verbindungsanordnung weist das zweite Verbindungsmittel eine mittige zylindrische Ausnehmung, die sich vorzugsweise vollständig oder teilweise durch das Material erstreckt, auf und ist insbesondere hülsenförmig ausgebildet. Dabei wird die Aufnahme, die zum Einsetzen des zweiten Abschnitts des ersten Verbindungsmittels dient, von der mittigen Längsbohrung gebildet. Ein derart aufgebautes Verbindungsmittel, insbesondere wenn es eine Verbindungshülse ist, ist besonders einfach herzustellen und auch auf eine einfache Weise in automatisierte Herstellungsprozesse zu integrieren.

Gemäß wiederum einer weiteren Ausgestaltung der erfindungsgemäßen Verbindungsanordnung weist das zweite Verbindungsmittel außen umlaufende Zähne oder Rippen auf. Diese dienen zur axialen Fixierung des zweiten Verbindungsmittels in dem weiteren Bauteil, insbesondere der weiteren Leichtbauplatte, und erhöhen gegebenenfalls im montierten Zustand die Klemmkraft zwischen dem ersten Verbindungsmittel und dem zweiten Verbindungsmittel im Bereich des zweiten Abschnitts.

Gemäß noch einer weiteren Ausgestaltung der erfindungsgemäßen Verbindungsanordnung weist das zweite Verbindungsmittel an seinem im bestimmungsgemäß mit dem ersten Verbindungsmittel verbundenen Zustand zum ersten Abschnitt weisenden Ende einen umlaufenden Kragen auf. Der umlaufende Kragen kann dabei in seiner Form dem umlaufenden Kragen des ersten Verbindungsmittels entsprechen. Dieser Kragen dient als Anschlag für den Fall, dass zunächst das zweite Verbindungsmittel in die dafür vorgesehene stirnseitige Aufnahme in dem weiteren Bauteil, insbesondere in der weiteren Leichtbauplatte, eingesetzt werden soll und erst anschließend das weitere Bauteil stirnseitig mit der ersten Leichtbauplatte, in die stirnseitig das erste Verbindungsmittel eingesetzt ist, zusammengefügt wird, wodurch das zweite Verbindungsmittel auf das erste Verbindungsmittel aufgesteckt wird.

Gemäß noch einer anderen Ausgestaltung der erfindungsgemäßen Verbindungsanordnung weist das zweite Verbindungsmittel außenseitige längsverlaufende Nuten auf, wobei die Wandstärke des zweiten Verbindungsmittels im Bereich der längsverlaufenden Nuten vorzugsweise verringert ist. Die längsverlaufenden Nuten haben den Vorteil, dass sich beim Einsetzen des zweiten verbindungsmittels in die dafür vorgesehene Aufnahme in dem weiteren Bauteil zunächst der Außenquerschnitt des zweiten Verbindungsmittels verringert, wodurch dieses einfacher in die dafür vorgesehene Aufnahme eingesetzt werden kann. Wird dann das zweite Verbindungsmittel bestimmungsgemäß mit dem ersten Verbindungsmittel verbunden, wodurch der zweite Abschnitt des ersten Verbindungsmittels in die dafür vorgesehene Aufnahme im zweiten Verbindungsmittel eingesetzt wird, erweitert sich der Querschnitt des zweiten Verbindungsmittels wieder, wodurch eine kraftschlüssige und gegebenenfalls auch formschlüssige Verbindung zwischen dem zweiten Verbindungsmittel und dem weiteren Bauteil erreicht wird.

Bei der erfindungsgemäßen Verbindungsanordnung ist wie gesagt vorgesehen, dass der erste Abschnitt des ersten Verbindungsmittels an der Stirnkante der Leichtbauplatte zumindest teilweise, vorzugsweise vollständig, in einer Richtung parallel zur Plattenebene in die Leichtbauplatte eingesetzt und kraftschlüssig mit den beiden Deckplatten verbunden ist. Der erste Abschnitt hat dabei beispielsweise eine Breite (bzw. einen Durchmesser), die der Dicke der Mittellage entspricht, berührt also die jeweilige Innenseite der beiden Deckplatten. Es ist aber auch denkbar, dass der erste Abschnitt eine Breite (bzw. einen Durchmesser) hat, die größer als die Dicke der Mittellage ist, wobei in diesem Fall eine Ausfräsung in den Deckplatten vorgesehen sein kann, die den Außenabmessungen des ersten Abschnitts des ersten Verbindungsmittels entspricht. Auch für den jeweiligen Kragen kann eine Ausfräsung vorgesehen sein.

Wie ebenfalls bereits angedeutet, ist gemäß einer weiteren Ausgestaltung der erfindungsgemäßen Verbindungsanordnung vorgesehen, dass der zweite Abschnitt des ersten Verbindungsmittels allein, das heißt ohne das zweite Verbindungsmittel, und zumindest teilweise, vorzugsweise vollständig, in das weitere Bauteil, beispielsweise die weitere Leichtbauplatte, eingesetzt ist. In diesem Fall kann die Verbindungsvorrichtung allein aus dem ersten Verbindungsmittel bestehen. Ein zweites Verbindungsmittel wie es zuvor beschrieben wurde ist in diesem Fall nicht notwendig.

Gemäß einer alternativen Ausgestaltung ist es aber auch möglich, dass das weitere Bauteil wie beschrieben eine weitere Leichtbauplatte ist und in diesem Fall der zweite Abschnitt des ersten Verbindungsmittels insbesondere zusammen mit dem zweiten Verbindungsmittel an der Stirnkante der weiteren Leichtbauplatte zumindest teilweise, vorzugsweise vollständig, in einer Richtung parallel zur Plattenebene in die Leichtbauplatte eingesetzt und kraftschlüssig mit den beiden Deckplatten verbunden ist. In diesem Fall ist also der zweite Abschnitt des ersten Verbindungsmittels in das zweite Verbindungsmittel eingeführt. In diesem Fall hat das zweite Verbindungsmittel beispielsweise eine Breite (bzw. einen Durchmesser), die der Dicke der Mittellage der entsprechenden Leichtbauplatte entspricht, berührt also die jeweilige Innenseite der beiden Deckplatten dieser Leichtbauplatte. Alternativ kann auch das zweite Verbindungsmittel eine Breite (bzw. einen Durchmesser) haben, die größer als die Dicke der Mittellage ist, wobei in diesem Fall eine Ausfräsung in den Deckplatten vorgesehen sein kann, die den Außenabmessungen des zweiten Verbindungsmittels entspricht. Auch hier ist für den Kragen eine entsprechende Ausfräsung denkbar.

Es gibt nun eine Vielzahl von Möglichkeiten, die erfindungsgemäße Verbindungsanordnung auszugestalten und weiterzubilden. Hierzu sei einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigen:
- Figuren 1a) und b): ein erstes Ausführungsbeispiel einer erfindungsgemäßen Verbindungsanordnung,
- Figuren 2a) bis c): ein zweites Ausführungsbeispiel einer erfindungsgemäßen Verbindungsanordnung und
- Fig. 3: einen Bestandteil einer Verbindungsvorrichtung gemäß der vorliegenden Erfindung.

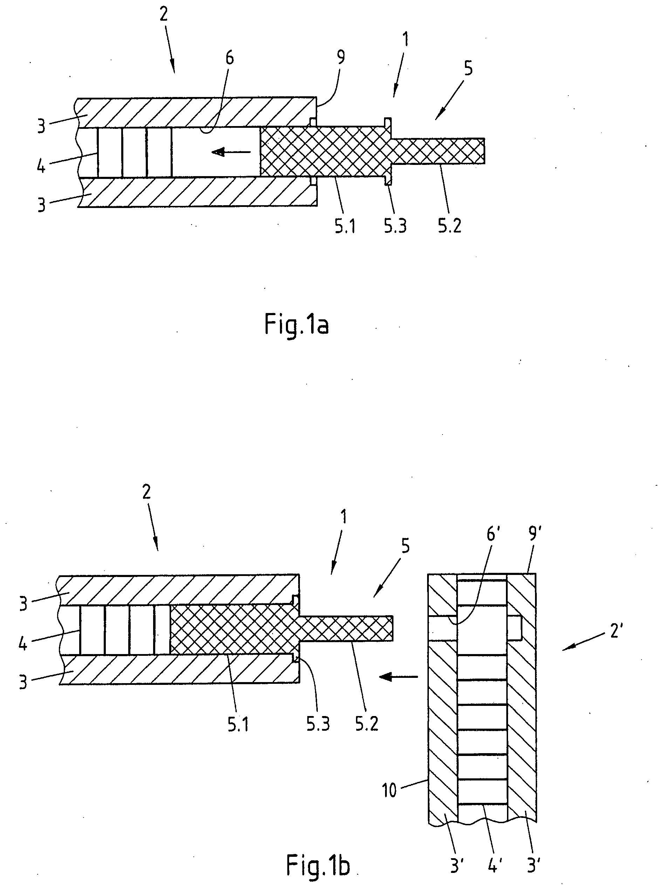

In den Figuren 1a) und b) ist die Herstellung einer erfindungsgemäßen Verbindungsanordnung unter Verwendung einer Verbindungsvorrichtung 1 dargestellt.

Die Verbindungsvorrichtung 1 dient zum Verbinden einer Leichtbauplatte 2, die zwei Deckplatten 3 aus einem Holzwerkstoff, beispielsweise einer Span-, Faser- oder OSB-Platte, und eine wabenförmige Mittellage 4 dazwischen aufweist, mit einem weiteren Bauteil, hier einer gleichermaßen aufgebauten Leichtbauplatte 2' mit zwei Deckplatten 3' und einer Mittellage 4'. Die Verbindungsvorrichtung 1 enthält ein erstes Verbindungsmittel 5 mit einem ersten Abschnitt 5.1, der zum Einsetzen in eine Vertiefung 6 in der Leichtbauplatte 2 konfiguriert ist, und mit einem zweiten Abschnitt 5.2, der zum Einsetzen in eine Vertiefung 6' in der weiteren Leichtbauplatte 2' konfiguriert ist.

Dabei erstreckt sich die Vertiefung 6 der Leichtbauplatte 2 von der Stirnkante 9 parallel zur Plattenebene, das heißt parallel zu den beiden Deckplatten 3, ins Innere der Leichtbauplatte 2. Die Vertiefung 6' der anderen Leichtbauplatte 2' erstreckt sich dabei von einer Seitenfläche 10 der Leichtbauplatte 2' senkrecht zur Plattenebene, das heißt senkrecht zu den beiden Deckplatten 3', ins Innere der Leichtbauplatte 2', wobei in diesem Fall die Vertiefung 6' vollständig durch die eine Deckplatte 3' und durch die gesamte Mittellage 4' bis in die gegenüberliegende Deckplatte 3' reicht.

Zum Erzeugen der Verbindungsanordnung wird die Verbindungsvorrichtung 1 mit ihrem ersten Abschnitt 5.1 in die Vertiefung 6 und mit ihrem zweiten Abschnitt 5.2 in die Vertiefung 6' eingesetzt. Dazu hat der erste Abschnitt 5.1 einen größeren Außenquerschnitt als der zweite Abschnitt 5.2.

Auf diese Weise dient der zweite (kleinere) Abschnitt 5.2 als Ersatz für einen herkömmlichen stiftförmigen Holzdübel. Der erste (größere) Abschnitt 5.1 weist dagegen solche Außenabmessungen auf, dass er im eingesetzten Zustand beide Deckplatten 3 der Leichtbauplatte 2 berührt und eine kraftschlüssige Verbindung zwischen Leichtbauplatte 2 und Verbindungsvorrichtung 1 gewährleistet.

Ein Kragen 5.3, der zwischen dem ersten Abschnitt 5.1 und dem zweiten Abschnitt 5.2 angeordnet ist, dient als Anschlag beim Einsetzen der Verbindungsvorrichtung 1 in die Leichtbauplatte 2.

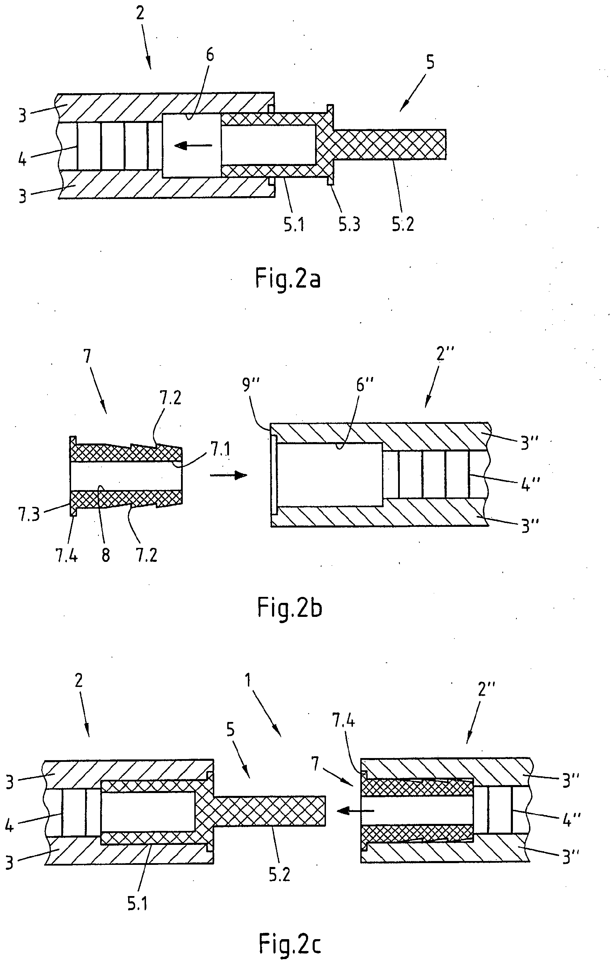

Wie Fig. 1b) zeigt, dient der zweite Abschnitt 5.2 nicht zu einer stirnseitigen Verbindung der beiden Leichtbauplatten 2 und 2', bei der also die Stirnkante 9 der einen Leichtbauplatte 2 und die Stirnkante 9' der anderen Leichtbauplatte 2' einander gegenüberliegen und berühren. Für eine solche Verbindung ist vielmehr die Verbindungsvorrichtung 1 und Verbindungsanordnung geeignet, die in den Figuren 2a) bis c) dargestellt ist.

Im Unterschied zu den Figuren 1a) und b) ist bei dem Ausführungsbeispiel in den Figuren 2a) bis c) neben dem ersten Verbindungsmittel 5 noch ein zweites Verbindungsmittel 7 vorgesehen, welches mit dem ersten Verbindungsmittel 5 zusammengesteckt werden kann. Das zweite Verbindungsmittel 7 ist zum Einsetzen in eine Vertiefung 6" in einem weiteren Bauteil 2", hier auch einer Leichtbauplatte 2", konfiguriert und weist eine Aufnahme 8 in Form einer mittigen Längsbohrung 7.1 auf, die zum vollständigen Einsetzen des zweiten Abschnitts 5.2 des ersten Verbindungsmittels 5 konfiguriert ist, derart, dass der zweite Abschnitt 5.2 kraftschlüssig mit dem zweiten Verbindungsmittel verbindbar ist.

In diesem Fall ist das zweite Verbindungsmittel 7 hülsenförmig ausgebildet und weist außen umlaufende Rippen oder Zähne 7.2 und an seinem einen Ende 7.3 einen umlaufenden Kragen 7.4 als Anschlag auf.

Auch bei diesem Ausführungsbeispiel wird, wie Fig. 2a) zeigt, zunächst das erste Verbindungsmittel 5 in die dafür vorgesehene Vertiefung 6 in der Leichtbauplatte 2 eingesetzt. In diesem Fall ist die Vertiefung 6 durch eine stirnseitige Ausfräsung hergestellt worden, die bis in die beiden Deckplatten 3 reicht.

Wie Fig. 2b) zeigt, kann anschließend das zweite Verbindungsmittel 7, bevor es mit dem ersten Verbindungsmittel 5 verbunden wird, zunächst in die Vertiefung 6" der Leichtbauplatte 2" eingesetzt werden, wobei für eine optimale Platzierung als Anschlag der Kragen 7.4 dient. Danach werden, wie Fig. 2c) zeigt, die beiden Leichtbauplatten 2 und 2" zusammengeführt, um eine Verbindungsanordnung zu bilden. Alternativ kann das zweite Verbindungsmittel 7 zunächst auf das erste Verbindungsmittel 5 aufgesetzt werden und daran anschließend die zweite Leichtbauplatte 2" mit ihrer Stirnkante 9" in Richtung der ersten Leichtbauplatte 2 bewegt werden, um eine Steckverbindung herzustellen.

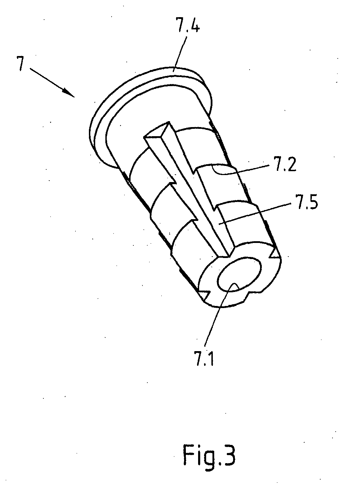

Fig. 3 zeigt schließlich ein Ausführungsbeispiel eines zweiten Verbindungsmittels 7, wie es beispielsweise auch bei der Verbindungsanordnung in den Figuren 2a) bis c) verwendet wird.

Das zweite Verbindungsmittel 7 ist dabei hülsenförmig mit einer mittig verlaufenden zylindrischen Ausnehmung 7.1 ausgebildet, weist eine Mehrzahl von in Längsrichtung nebeneinander angeordneten Rippen oder Zähnen 7.2 auf sowie einen umlaufenden Kragen 7.4.

Ferner ist bei diesem Verbindungsmittel 7 außerdem eine Mehrzahl von außenseitigen längsverlaufenden Nuten 7.5 vorgesehen, wobei die Nuten 7.5 über den Umfang in einem Abstand von 90° angeordnet sind. Die Nuten 7.5 dienen dazu, im Bereich ihres Verlaufs die Wandstärke des Verbindungsmittels 7 zu reduzieren, so dass das Verbindungsmittel 7 beim Einführen in eine Vertiefung 6" einer Leichtbauplatte 2" vorübergehend seinen Außenquerschnitt reduzieren kann, um auf diese Weise leichter eingeführt werden zu können. Wird dann anschließend eine Verbindung zwischen erstem Verbindungsmittel 5 und zweitem Verbindungsmittel 7 hergestellt, weitet sich der Außenquerschnitt des zweiten Verbindungsmittels 7 wieder, so dass sich eine kraft- und formschlüssige Verbindung zwischen der Außenseite des zweiten Verbindungsmittels 7 und den Innenseiten der Deckplatten 3" ergibt. Gleichzeitig ergibt sich auch eine kraftschlüssige Verbindung zwischen der Außenseite des zweiten Abschnitts 5.2 des ersten Verbindungsmittels 5 und der Innenseite des zweiten Verbindungsmittels 7.

## Patentansprüche

1. Verbindungsanordnung
- mit einer Leichtbauplatte (2), die zwei Deckplatten (3) und eine Mittellage (4) dazwischen aufweist,
- mit einem weiteren Bauteil (2',2") und
- mit einer Verbindungsvorrichtung (1) zum Verbinden der Leichtbauplatte (2) mit dem weiteren Bauteil (2',2"), enthaltend ein erstes Verbindungsmittel (5) mit einem ersten Abschnitt (5.1), der zum Einsetzen in eine Vertiefung (6) in der Leichtbauplatte (2) konfiguriert ist, und mit einem zweiten Abschnitt (5.2), der zum Einsetzen in eine Vertiefung (6') in dem weiteren Bauteil (2',2") konfiguriert ist, wobei die Verbindungsvorrichtung (1) die Leichtbauplatte (2) mit dem weiteren Bauteil (2',2") verbindet und wobei der erste Abschnitt (5.1) einen größeren Außenquerschnitt als der zweite Abschnitt (5.2) hat,
- wobei sich die Vertiefung (6) der Leichtbauplatte (2) von einer Stirnkante (9) der Leichtbauplatte (2) parallel zu den beiden Deckplatten (3) ins Innere der Leichtbauplatte (2) erstreckt,
- wobei der erste Abschnitt (5.1) des ersten Verbindungsmittels (5) zumindest teilweise, vorzugsweise vollständig, in der Vertiefung (6) angeordnet ist und
- **dadurch gekennzeichnet, dass** der erste Abschnitt (5.1) des ersten Verbindungsmittels (5) beide Deckplatten (3) der Leichtbauplatte (2) berührt und dadurch eine kraftschlüssige Verbindung zwischen Leichtbauplatte (2) und Verbindungsvorrichtung (1) bildet, und
- dass der erste Abschnitt (5.1) und der zweite Abschnitt (5.2) des ersten Verbindungsmittels (5) zumindest abschnittsweise aus demselben Material bestehen und einstückig sind.

2. Verbindungsanordnung nach Anspruch 1, **dadurch gekennzeichnet, dass** der erste Abschnitt (5.1) und der zweite Abschnitt (5.2) einen kreisförmigen Außenquerschnitt haben und der Durchmesser des ersten Abschnitts (5.1) größer als der Durchmesser des zweiten Abschnitts (5.2) ist.

3. Verbindungsanordnung nach Anspruch 1 oder 2, **dadurch gekennzeichnet, dass** der erste Abschnitt (5.1) und/oder der zweite Abschnitt (5.2) zumindest über einen Teil seiner Länge, insbesondere über den größten Teil seiner Länge, hohl ist.

4. Verbindungsanordnung nach einem der vorangehendne Ansprüche, **dadurch gekennzeichnet, dass** zwischen dem ersten Abschnitt (5.1) und dem zweiten Abschnitt (5.2) ein umlaufender Kragen (5.3) vorgesehen ist.

5. Verbindungsanordnung nach einem der vorangehenden Ansprüche, **dadurch gekennzeichnet, dass** sie ein zweites Verbindungsmittel (7) enthält, das zum Einsetzen in eine Vertiefung (6") in dem weiteren Bauteil (2") konfiguriert ist und eine Aufnahme (8) aufweist, die zum zumindest teilweisen, vorzugsweise vollständigen, Einsetzen des zweiten Abschnitts (5.2) des ersten Verbindungsmittels (5) konfiguriert ist, insbesondere derart, dass der zweite Abschnitt (5.2) des ersten Verbindungsmittels (5) kraftschlüssig mit dem zweiten Verbindungsmittel (7) verbindbar ist.

6. Verbindungsanordnung nach einem der vorangehenden Ansprüche, **dadurch gekennzeichnet, dass** der erste Abschnitt (5.1) und der zweite Abschnitt (5.2) des ersten Verbindungsmittels (5) und das zweite Verbindungsmittel (7) zumindest abschnittsweise, vorzugsweise vollständig, aus demselben Material, insbesondere einem Kunststoff, bestehen.

7. Verbindungsanordnung nach Anspruch 5 oder 6, **dadurch gekennzeichnet, dass** das zweite Verbindungsmittel (7) eine mittige Längsbohrung (7.1) aufweist und insbesondere hülsenförmig ausgebildet ist, wobei die Aufnahme (8) von der mittigen Längsbohrung (7.1) gebildet wird.

8. Verbindungsanordnung nach einem der Ansprüche 5 bis 7, **dadurch gekennzeichnet, dass** das zweite Verbindungsmittel (7) außen umlaufende Rippen oder Zähne (7.2) aufweist.

9. Verbindungsanordnung nach einem der Ansprüche 5 bis 8, **dadurch gekennzeichnet, dass** das zweite Verbindungsmittel (7) an seinem im bestimmungsgemäß mit dem ersten Verbindungsmittel (5) verbundenen Zustand zum ersten Abschnitt (5.1) weisenden Ende (7.3) einen umlaufenden Kragen (7.4) aufweist.

10. Verbindungsanordnung nach einem der Ansprüche 5 bis 9, **dadurch gekennzeichnet, dass** das zweite Verbindungsmittel (7) außenseitige längsverlaufende Nuten (7.5) aufweist und die Wandstärke des zweiten Verbindungsmittels (7) im Bereich der längsverlaufenden Nuten (7.5) vorzugsweise verringert ist.

11. Verbindungsanordnung nach einem der vorangehenden Ansprüche, **dadurch gekennzeichnet, dass** der zweite Abschnitt (5.2) des ersten Verbindungsmittels (5) allein und zumindest teilweise, vorzugsweise vollständig, in das weitere Bauteil (2') eingesetzt ist.

12. Verbindungsanordnung nach einem der Ansprüche 1 bis 10, **dadurch gekennzeichnet, dass** das weitere Bauteil (2',2") eine weitere Leichtbauplatte (2',2") ist und der zweite Abschnitt (5.2) des ersten Verbindungsmittels (5) insbesondere zusammen mit dem zweiten Verbindungsmittel (7) an der Stirnkante (9") der weiteren Leichtbauplatte (2") zumindest teilweise, vorzugsweise vollständig, in einer Richtung parallel zur Plattenebene in die weitere Leichtbauplatte (2") eingesetzt und kraftschlüssig mit den beiden Deckplatten (3") der Leichtbauplatte (2") verbunden ist.

## Claims

1. Connecting arrangement
- having a lightweight board (2) which has two cover panels (3) and a middle layer (4) therebetween,
- having a further component (2', 2") and
- having a connecting device (1) for connecting the lightweight board (2) to the further component (2', 2"), containing a first connecting means (5) having a first portion (5.1) which is configured for insertion into a recess (6) in the lightweight board (2), and having a second portion (5.2) which is configured for insertion into a recess (6') in the further component (2', 2"), wherein the connecting device (1) connects the lightweight board (2) to the further component (2', 2") and wherein the first portion (5.1) has a larger outer cross-section than the second portion (5.2),
- wherein the recess (6) of the lightweight board (2) extends from a front edge (9) of the lightweight board (2) parallel to the two cover panels (3) into the inside of the lightweight board (2),
- wherein the first portion (5.1) of the first connecting means (5) is at least partially, preferably completely, arranged in the recess (6) and
- **characterized in that** the first portion (5.1) of the first connecting means (5) touches the two cover panels (3) of the lightweight board (2) and thereby forms a non-positive connection between lightweight board (2) and connecting device (1), and that, at least section wise, the first portion (5.1) and the second portion (5.2) of the first connecting means (5) are made from the same material and are in one piece.

2. Connecting arrangement according to Claim 1, **characterized in that** the first portion (5.1) and the second portion (5.2) have a circular outer cross-section and the diameter of the first portion (5.1) is greater than the diameter of the second portion (5.2).

3. Connecting arrangement according to Claim 1 or 2, **characterized in that** the first portion (5.1) and/or the second portion (5.2) is hollow at least over a part of its length, in particular over the greatest part of its length.

4. Connecting arrangement according to any one of the preceding claims, **characterized in that** an encircling collar (5.3) is provided between the first portion (5.1) and the second portion (5.2).

5. Connecting arrangement according to any one of the preceding claims, **characterized in that** it contains a second connecting means (7) which is configured for insertion into a recess (6") in the further component (2") and has a receptacle (8) which is configured for at least partial, preferably complete, insertion of the second portion (5.2) of the first connecting means (5), in particular in such a way that the second portion (5.2) of the first connecting means (5) can be non-positively connected to the second connecting means (7).

6. Connecting arrangement according to any one of the preceding claims, **characterized in that** the first portion (5.1) and the second portion (5.2) of the first connecting means (5) and the second connecting means (7) consist, at least section wise, preferably completely, of the same material, in particular of a plastics material.

7. Connecting arrangement according to Claim 5 or 6, **characterized in that** the second connecting means (7) has a central longitudinal hole (7.1) and, in particular, is designed in the form of a sleeve, wherein the receptacle (8) is formed by the central longitudinal hole (7.1).

8. Connecting arrangement according to any one of Claims 5 to 7, **characterized in that** the second connecting means (7) has externally encircling ribs or teeth (7.2).

9. Connecting arrangement according to any one of Claims 5 to 8, **characterized in that** at its end (7.3) pointing toward the first portion (5.1) when properly connected to the first connecting means (5), the second connecting means (7) has an encircling collar (7.4).

10. Connecting arrangement according to any one of Claims 5 to 9, **characterized in that** the second connecting means (7) has external, longitudinally extending grooves (7.5) and the wall thickness of the second connecting means (7) is preferably reduced in the region of the longitudinally extending grooves (7.5).

11. Connecting arrangement according to any one of the preceding claims, **characterized in that** the second portion (5.2) of the first connecting means (5) is inserted solely and at least partially, preferably completely, into the further component (2').

12. Connecting arrangement according to any one of Claims 1 to 10, **characterized in that** the further component (2', 2") is a further lightweight board (2', 2") and the second portion (5.2) of the first connecting means (5) is inserted, in particular together with the second connecting means (7) at the front edge (9") of the further lightweight board (2"), at least partially, preferably completely, in a direction parallel to the panel plane into the further lightweight board (2") and non-positively connected to the two cover panels (3") of the lightweight board (2").

## Revendications

1. Agencement d'assemblage
- comprenant un panneau léger (2) qui présente deux panneaux de recouvrement (3) et une couche intermédiaire (4) disposée entre ces panneaux de recouvrement,
- comprenant un autre composant (2', 2") et
- comprenant un dispositif d'assemblage (1) servant à l'assemblage du panneau léger (2) avec l'autre composant (2', 2"), ledit dispositif d'assemblage contenant un premier moyen d'assemblage (5) comportant une première partie (5.1) qui est configurée pour être introduite dans un creux (6) formé dans le panneau léger (2), et comportant une seconde partie (5.2) qui est configurée pour être introduite dans un creux (6') formé dans l'autre composant (2', 2"), où le dispositif d'assemblage (1) assemble le panneau léger (2) avec l'autre composant (2', 2"), et où la première partie (5.1) a une section extérieure plus grande que celle de la seconde partie (5.2),
- où le creux (6) du panneau léger (2) s'étend, à partir d'une arête frontale (9) du panneau léger (2), à l'intérieur du panneau léger (2) parallèlement aux deux panneaux de recouvrement (3),
- où la première partie (5.1) du premier moyen d'assemblage (5) est disposée au moins partiellement, de préférence complètement, dans le creux (6), et
**caractérisé**
- **en ce que** la première partie (5.1) du premier moyen d'assemblage (5) vient au contact des deux panneaux de recouvrement (3) du panneau léger (2) et, de ce fait, forme un assemblage réalisé par action de force entre le panneau léger (2) et le dispositif d'assemblage (1), et
- **en ce que** la première partie (5.1) et la seconde partie (5.2) du premier moyen d'assemblage (5) se composent au moins partiellement de la même matière et forment une seule et même pièce.

2. Agencement d'assemblage selon la revendication 1, **caractérisé en ce que** la première partie (5.1) et la seconde partie (5.2) ont une section extérieure en forme de cercle, et le diamètre de la première partie (5.1) est plus grand que le diamètre de la seconde partie (5.2).

3. Agencement d'assemblage selon la revendication 1 ou 2, **caractérisé en ce que** la première partie (5.1) et/ou la seconde partie (5.2) est creuse au moins sur une partie de sa longueur, en particulier sur la plus grande partie de sa longueur.

4. Agencement d'assemblage selon l'une quelconque des revendications précédentes, **caractérisé en ce qu'**il est prévu une collerette circulaire (5.3) disposée entre la première partie (5.1) et la seconde partie (5.2).

5. Agencement d'assemblage selon l'une quelconque des revendications précédentes, **caractérisé en ce qu'**il contient un second moyen d'assemblage (7) qui est configuré pour être introduit dans un creux (6") formé dans l'autre composant (2"), et présente un logement (8) qui est configuré pour l'introduction au moins partielle, de préférence complète, de la seconde partie (5.2) du premier moyen d'assemblage (5), en particulier de manière telle, que la seconde partie (5.2) du premier moyen d'assemblage (5) puisse être assemblée, par action de force, avec le second moyen d'assemblage (7).

6. Agencement d'assemblage selon l'une quelconque des revendications précédentes, **caractérisé en ce que** la première partie (5.1) et la seconde partie (5.2) du premier moyen d'assemblage (5), et le second moyen d'assemblage (7), se composent au moins partiellement, de préférence complètement, de la même matière, en particulier d'une matière plastique.

7. Agencement d'assemblage selon la revendication 5 ou 6, **caractérisé en ce que** le second moyen d'assemblage (7) présente un perçage longitudinal (7.1) placé au milieu et est configuré en particulier en forme de douille, où le logement (8) est formé par le perçage longitudinal (7.1) placé au milieu.

8. Agencement d'assemblage selon l'une quelconque des revendications 5 à 7, **caractérisé en ce que** le second moyen d'assemblage (7) présente des nervures ou des dents (7.2) placées extérieurement sur le pourtour.

9. Agencement d'assemblage selon l'une quelconque des revendications 5 à 8, **caractérisé en ce que** le second moyen d'assemblage (7), quand il est assemblé, conformément à son utilisation, avec le premier moyen d'assemblage (5), présente, au niveau de son extrémité (7.3) pointant vers la première partie (5.1), une collerette circulaire (7.4).

10. Agencement d'assemblage selon l'une quelconque des revendications 5 à 9, **caractérisé en ce que** le second moyen d'assemblage (7) présente des rainures (7.5) s'étendant longitudinalement sur le côté extérieur, et l'épaisseur de paroi du second moyen d'assemblage (7) est de préférence diminuée dans la zone des rainures (7.5) s'étendant longitudinalement.

11. Agencement d'assemblage selon l'une quelconque des revendications précédentes, **caractérisé en ce que** la seconde partie (5.2) du premier moyen d'assemblage (5) est introduite dans l'autre composant (2'), seule et au moins partiellement, de préférence complètement.

12. Agencement d'assemblage selon l'une quelconque des revendications 1 à 10, **caractérisé en ce que** l'autre composant (2', 2") est un autre panneau léger (2', 2"), et la seconde partie (5.2) du premier moyen d'assemblage (5) est introduite dans l'autre panneau léger (2") au moins partiellement, de préférence complètement, suivant une direction parallèle au plan du panneau, ladite introduction étant réalisée au niveau de l'arête frontale (9") de l'autre panneau léger (2"), en particulier en association avec le second moyen d'assemblage (7), ladite seconde partie étant assemblée par action de force avec les deux panneaux de recouvrement (3") du panneau léger (2").
